# EUROPEAN PATENT SPECIFICATION

(11) **EP 3 409 635 B1**
(45) Date of publication and mention of the grant of the patent: **03.07.2019**
(21) Application number: 18174853.4
(22) Date of filing: 29.05.2018
(51) Int. Cl.: B66C 3/00, B66C 13/16, B66C 23/68, G01G 19/18, G01L 1/22

(54) **WEIGHING SYSTEM FOR A LIFTING DEVICE**
WIEGESYSTEM FÜR EINE HEBEVORRICHTUNG
SYSTÈME DE PESAGE POUR UN DISPOSITIF DE LEVAGE

(30) Priority: 29.05.2017 SE 1750666
(43) Date of publication of application: 05.12.2018
(73) Proprietor: Intermercato AB, 272 93 Tommarp (SE)
(72) Inventor: Hildebrand, Olle, 272 93 Tommarp (SE); Carlander, Carl-Axel, 148 97 Sorunda (SE); Andersson, Reinhold, 272 93 Tommarp (SE)
(74) Representative: AWA Sweden AB

(56) References cited:
- WO-A1-2004/005180
- WO-A1-2007/143838
- DE-A1-102005 028 123
- US-A1- 2015 323 377

## Description

### Technical field

The invention relates to a lifting system for handling a load and a method for weighing a load handled by the lifting system. The invention also relates to a computer program product which is adapted to carry out said method and a computer readable storage medium comprising said computer program product.

### Background art

In many cases it is desirable to obtain knowledge of the weight of a load that is manipulated by lifting equipment such as a crane or similar, and in this way the weight of the total amount of goods manipulated. This type of information is important in order to make it possible to use the full loading capacity of a vehicle while at the same time avoiding overload. It is not possible to obtain the said information if the weight of the goods is not known in advance.

It is also often necessary to know how much load a crane arm manipulates during a certain period, not least for statistical purposes, and in order to make it possible to carry out calculations that are necessary for control and follow up. Timber, scrap, bulk products are typical examples of products whose weight is difficult to determine without weighing. If load-sensitive arrangements are not available, the risk always arises that loading will take place without the required control, and with the associated risk for overload or for inefficient use of the required loading capacity of a transport vehicle.

Different types of lifting equipment with integrated load cells that can give, in response to an applied load, a signal that corresponds to the force that the applied load exerts on the load cell is previously known. Among these, the following one can be mentioned.

DE 10 2005 028123 A1 discloses a lifting system according to the preamble of claim 1. The lifting system has an elastically deformable measurement body with its ends adapted for coupling to the working device and to the tool, with a central force measurement axis and a force measurement device that converts deformation of the measurement body into a force signal. The measurement body is designed so that the location of the coupling and the force measurement device are arranged so that a force flow into the measurement body under compression essentially misses the force measurement device and a force due to traction passes the force measurement device.

US 3,911,737 concerns an arrangement for the weighing of loads that have been lifted by a grab, such as an individual tree trunk or a bundle of trunks. A load cell is connected in the arrangement between the end of a crane arm that is a component of the arrangement and a rotator, in order to measure the lifting force that arises. The load cell is designed as a suspension scale that extends over the distance between the free end of the crane arm and the load that is to be carried. The extra distance between the crane arm and the load that the suspension scale introduces results in an increased risk of oscillations and it complicates the manipulation of the load. The unprotected design involves a high risk of damage to the load cell from impacts and collisions.

Another problem that might arise with the currently known weighing systems is that the further away the load cell is located from the load, the more difficult it will be to calculate the weight of the load accurately. At the same time as the location of the strain gauges of the load cell as close as possible to the load makes it possible to obtain more accurate measurement results, there arises not only the problem of the risk of damage to the load cell due to its exposed position close to the load, but also problems with efficiently and securely supplying the load cell with power and of leading away output signals from the load cell to some type of calculation means or weighing instrument in order to determine the weight of the load.

Further, the calculation means is normally located at a distance away from the load cell, for example on the base machine that supports the crane arm. It should be understood also that in the same way as a load cell that is located relatively close to the load risks being exposed to damage and impacts, also the sensor cable that supplies the measurement cell with power and that leads an output signal from the measurement cell runs a great risk of being damaged, of becoming stuck in an object and becoming crushed during manipulation of the load by means of the crane arm.

### Summary of the invention

It is an objective of the present invention to mitigate, alleviate or eliminate one or more of the above-identified deficiencies in the art and disadvantages singly or in any combination and solve at least the above mentioned problems.

According to a first aspect of the invention, these and other objects, and/or advantages that will be apparent from the following description of embodiments, are achieved, in full or at least in part, by a lifting system for handling a load, comprising a lifting arm extending at least partly between an operating device and a work implement, and a load cell for detecting a weight of the load. The load cell comprises a first portion connected to the lifting arm, a second portion connected to the work implement, and an intermediate portion connecting the first portion and the second portion. The intermediate portion comprises at least one strain gauge. The first portion, the second portion and the intermediate portion are connected to each other in a radial direction. The first portion comprises an inner portion of the load cell and the second portion comprises an outer portion of the load cell, or in that the first portion comprises an outer portion of the load cell and the second portion comprises an inner portion of the load cell.

In this way, the weighing system is integrated in the lifting device in a simple yet reliable manner. The overall height of the components included in the weighing system can be kept to an absolute minimum while allowing the weighing system to be mechanically over-dimensioned. This is especially advantageous in that it makes the weighing system suitable for handling load shocks. Also, the weighing system is placed in almost direct connection with the load to be handled by means of the lifting device, which makes it possible to achieve accurate weighing results.

The lifting system may further comprise a rotator arranged between the first portion and the lifting arm.

The lifting system may further comprise a rotator arranged between the second portion and the work implement.

The first portion, the second portion and the intermediate portion may be integrally formed.

The first portion, the second portion and the intermediate portion may be connected to each other in a radial direction using an attachment means.

The first portion may comprise an inner portion of the load cell and the second portion comprises an outer portion of the load cell.

The first portion may comprise an outer portion of the load cell and the second portion comprises an inner portion of the load cell.

The load cell may comprise a centered through hole for delivery of oil to the work implement.

The intermediate portion may comprise weakening portions in order to enhance any strain in the intermediate portion.

The lifting system may further comprise amplifier connected to the at least one strain gauge to enhance the signal from the at least one strain gauge. The lifting device may further comprise an accelerometer and/or an inclinometer.

The lifting system may further comprise a control box adapted to calculate the weight of the load based on a signal from the at least one strain gauge.

The lifting system may further comprise a display unit in communication with the control box adapted to display the calculated weight of the load.

The communication between the display unit and the control box may be achieved by means of a cable or wireless connection.

In one specific embodiment, the intermediate plate comprises eight strain gauges and eight weakening portions.

According to a second aspect of the invention, these and other objects are achieved, in full or at least in part, by a method for weighing a load handled by the lifting system according to the first aspect of the invention. The method is characterised by the step of lifting the load by means of the work implement, and calculating a weight of the load based on a signal from the at least one strain gauge.

According to a third aspect of the invention, these and other objects are achieved, in full or at least in part, by a computer program product and a computer-readable storage medium with instructions adapted to carry out the method for weighing a load handled by a lifting system according to claim 1.

Effects and features of the second and third aspect of the present invention are largely analogous to those described above in connection with the first aspect of the inventive concept. Embodiments mentioned in relation to the first aspect of the present invention are largely compatible with the further aspects of the invention.

Other objectives, features and advantages of the present invention will appear from the following detailed disclosure, from the attached claims, as well as from the drawings.

Generally, all terms used in the claims are to be interpreted according to their ordinary meaning in the technical field, unless explicitly defined otherwise herein. All references to "a/an/the [element, device, component, means, step, etc.]" are to be interpreted openly as referring to at least one instance of said element, device, component, means, step, etc., unless explicitly stated otherwise.

As used herein, the term "comprising" and variations of that term are not intended to exclude other additives, components, integers or steps.

### Brief description of the drawings

The above, as well as additional objects, features and advantages of the present invention, will be better understood through the following illustrative and non-limiting detailed description of embodiments of the present invention, with reference to the appended drawings, where the same reference numerals may be used for similar elements, and wherein:
Fig. 1 is a perspective view of an exemplary lifting system according to a first aspect of the invention.

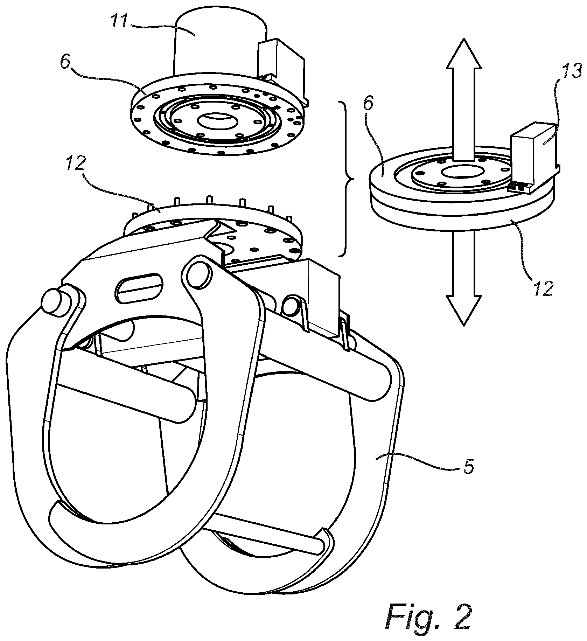

Fig. 2 is a perspective view illustrating a distribution of forces acting on the lifting system during use.
Fig. 3 and 4 are perspective views of a load cell and a connection plate of the lifting system.

### Detailed description of preferred embodiments of the invention

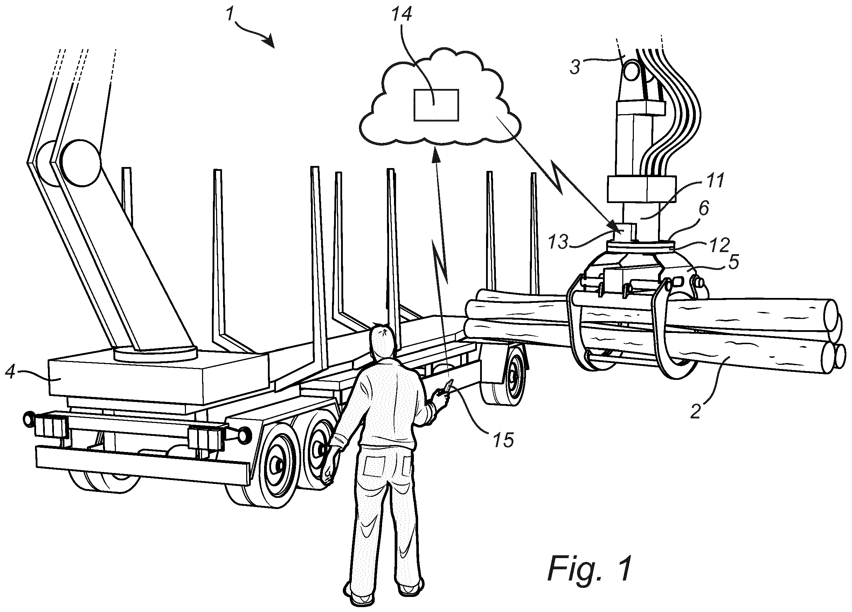

Fig. 1 illustrates an exemplary embodiment of a lifting system 1 for handling a load 2. The lifting system comprises a lifting arm 3 which extends between a working unit 4 and a gripping tool 5, and a load cell 6 which is used to detect a weight of the load 2. The load cell 6 is shaped as a round plate and comprises an outer portion 7, an inner portion 8 and an intermediate portion 9 connecting the outer portion 7 with the inner portion 8. The outer portion 7, the inner portion 8 and the intermediate portion 9 are integrally formed and connected to each other in a radial direction. The intermediate portion 9 comprises a plurality of strain gauges 10 configured to measure the weight of the load 2 and provide a signal that is proportional to the weight of the load 2.

The lifting system 1 has a rotator 11 arranged between load cell 6 and the lifting arm 3, which rotator 11 is connected to the inner portion 8 of the load cell 6. The lifting system 1 also has a connection plate 12 arranged between the load cell 6 and the gripping tool 5, which connection plate 12 is connected to the outer portion 7 of the load cell 6. An amplifier 13 is provided in the vicinity of the load cell 6 and connected to the strain gauges 10 to enhance the signal from the strain gauges 10.

The lifting system 1 further comprises a control box 14 adapted to calculate the weight of the load 2 based on the signal from the strain gauges 10, and a display unit 15 in communication with the control box 14, which display unit 15 is adapted to display the calculated weight of the load 2. The control box 14 is preferably located in a cab of the working unit 4 and the communication between the control box 14 and the display unit 15 is preferably achieved by means of a cable or wireless connection.

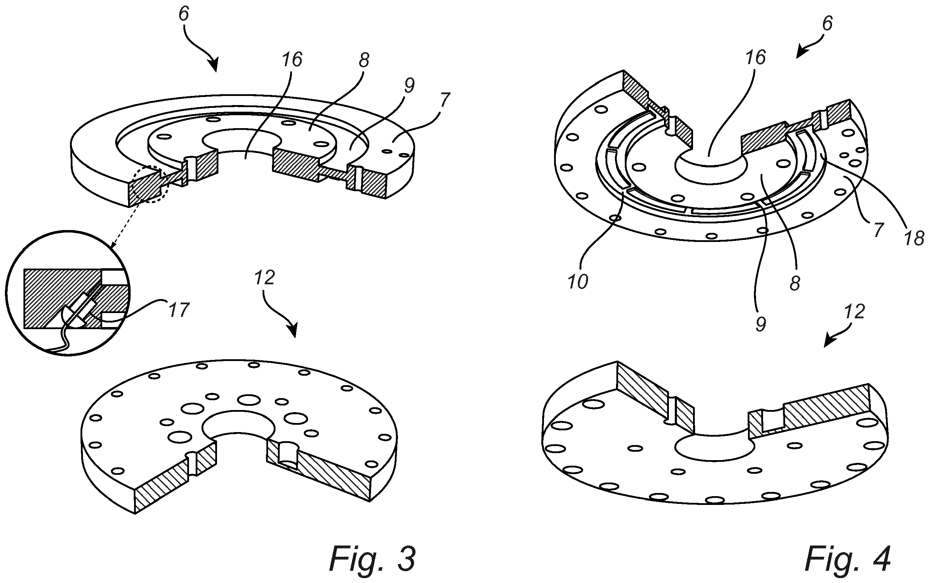

Fig. 3 and Fig. 4 illustrate an exemplary embodiment of the load cell 6. In this specific embodiment, the load cell 6 is shaped as a round plate and comprises an outer portion 7, an inner portion 8 and an intermediate portion 9 connecting the outer portion 7 with the inner portion 8. Here, the outer portion 7, the inner portion 8 and the intermediate portion 9 are integrally formed. In another preferred embodiment, the outer portion 7, the inner portion 8 and the intermediate portion 9 are simply attached to each other in the radial direction of the load cell 6.

The intermediate portion 9 comprises weakening portions 18 consisting of through holes which are evenly arranged adjacent to an outer end of the intermediate portion 9 in order to enhance any strain in the same. The strain gauges 10 are arranged between the weakening portions 18 of the intermediate portion 9, respectively.

The load cell 6 further comprises a centered through hole 16 for delivery of oil to the gripping tool 5 as well as a smaller through hole 17 provided for cable connection to the strain gauges 10.

When the weight of the load 2 carried by the gripping tool 5 is to be calculated, the strain in the intermediate portion 9 is measured by means of the strain gauges 10. The strain gauges 10 are configured to provide a signal that is proportional to the weight of the load 2. The strain in the intermediate portion 9 is a result of the forces acting on the outer portion 7 and the inner portion 8 in opposite directions.

The signal is enhanced by the amplifier 13 and transferred to the control box 14. The control box can thereafter calculate the weight of the load 2 based on the information from the signal. A user can review the information in from control box 14 by means of a display unit 15, such as a mobile phone, a tablet or a computer. Any information can be stored in the control box 14 or in a cloud memory.

Depending on the location of the load cell 6, the total weight recorded will include in addition to the weight of the load 2 itself also a tare weight, that consists of the deadweights of other compnents in the lifting system 1, such as the work implement 5 and sometimes the rotator 11 (depending on its placement in relation to the load cell 6). This tare weight is subtracted from the total weight that has been recorded during the calculation of the load weight in the control box 14. The measured value that is obtained in this way thus forms the weight of the load 2 supported by the lifting arm 3. With the aid of this correction for tare weight, the deadweight of, for example, the work implement 5, and other weights that affect the measurement result can be removed. It is appropriate that the calculation be carried out directly through the regulatory system that is a component of the working unit 4, of for example a forwarder for the handling of timber, and to which system the output signals from the measurement arrangement are connected.

The skilled person realizes that a number of modifications of the embodiments described herein are possible without departing from the scope of the invention, which is defined in the appended claims.

For instance, the placement of the rotator 11, the control box 14 and the amplifier 13 can be varied in any suitable way. The rotator may, for example, be mounted above the load cell 6 or below the load cell 6.

Also the interconnection between the components of the lifting system 1 may be varied.

The lifting system 1 may include upper and/or lower connection plates, normally arranged in direct connection with the load cell 6 if present in the lifting system 1.

The component of the lifting system 1 arranged above the load cell 6 may be connected to either the outer portion 7 of the load cell or to the inner portion 8 of the load cell. The same applies for the components arranged below the load cell 6. This applies as long as the lifting arm 3 is connected to one of the outer portion 7 and the inner portion 8, and the work implement 5 is connected to the other one of the outer portion 7 and the inner portion 8.

## Claims

1. A lifting system (1) for handling a load (2), comprising
a lifting arm (3) extending at least partly between an operating device (4) and a work implement (5), and
a load cell (6) for detecting a weight of the load (2),
wherein the load cell (6) comprises:
a first portion (7; 8) connected to the lifting arm (3),
a second portion (7; 8) connected to the work implement (5), and
an intermediate portion (9) connecting the first portion (7; 8) and the second portion (7; 8), the intermediate portion (9) comprising at least one strain gauge (10),
wherein the first portion (7; 8), the second portion (7; 8) and the intermediate portion (9) are connected to each other in a radial direction,
**characterised in that** the first portion (7; 8) comprises an inner portion (8) of the load cell (6) and the second portion (7; 8) comprises an outer portion (7) of the load cell (6), or **in that** first portion (7; 8) comprises an outer portion (7) of the load cell and the second portion (7; 8) comprises an inner portion (8) of the load cell.

2. The lifting system (1) according to claim 1, further comprising a rotator (11) attached to the first portion (7; 8) and arranged between the load cell 6 and the lifting arm (3).

3. The lifting system (1) according to claim 1, further comprising a rotator (11) attached to the second portion (7; 8) and arranged between the load cell (6) and the work implement (5).

4. The lifting system (1) according to any one of the preceding claims, wherein the first portion (7; 8), the second portion (7; 8) and the intermediate portion (9) are integrally formed.

5. The lifting system (1) according to any one of the preceding claims, wherein the first portion (7; 8), the second portion (7; 8) and the intermediate portion (9) are connected to each other in a radial direction using an attachment means.

6. The lifting system (1) according to any one of the preceding claims, wherein the load cell (6) comprises a centered through hole (16) for delivery of oil to the work implement (5).

7. The lifting system (1) according to any one of the preceding claims, wherein the intermediate portion (9) comprises weakening portions (18) in order to enhance any strain in the intermediate portion (9).

8. The lifting system (1) according to any one of the preceding claims, further comprising amplifier (13) connected to the at least one strain gauge (10) to enhance the signal from the at least one strain gauge (10).

9. The lifting system (1) according to any one of the preceding claims, further comprising a control box (14) adapted to calculate the weight of the load (2) based on a signal from the at least one strain gauge (10).

10. The lifting system (1) according to claim 9, further comprising a display unit (15) in communication with the control box (14) adapted to display the calculated weight of the load (2).

11. The lifting system (1) according to claim 10, wherein the communication between the display unit (15) and the control box (14) is achieved by means of a cable or wireless connection.

12. A method for weighing a load (2) handled by the lifting system (1) according to any one of claim 1 to 11,
**characterised by** the step of
lifting the load (2) by means of the work implement (5), and
calculating a weight of the load (2) based on a signal from the at least one strain gauge (10).

13. A computer program product comprising instructions adapted to carry out the method according to claim 12 when executed in a lifting system according to claim 9.

14. A computer readable storage medium comprising a computer program according to claim 13.

## Patentansprüche

1. Hebesystem (1) zur Handhabung einer Last (2), das Folgendes umfasst:
einen Hebearm (3), der mindestens teilweise zwischen einer Betätigungseinrichtung (4) und einem Arbeitsgerät (5) verläuft, und
eine Wägezelle (6), um ein Gewicht der Last (2) zu detektieren, wobei
die Wägezelle (6) Folgendes umfasst:
einen ersten Abschnitt (7; 8), der mit dem Hebearm (3) verbunden ist,
einen zweiten Abschnitt (7; 8), der mit dem Arbeitsgerät (5) verbunden ist, und
einen Zwischenabschnitt (9), der mit dem ersten Abschnitt (7; 8) und dem zweiten Abschnitt (7; 8) verbunden ist, wobei der Zwischenabschnitt (9) mindestens eine Dehnungsmesseinrichtung (10) umfasst, wobei
der erste Abschnitt (7; 8), der zweite Abschnitt (7; 8) und der Zwischenabschnitt (9) in radialer Richtung miteinander verbunden sind,
**dadurch gekennzeichnet, dass** der erste Abschnitt (7; 8) einen Innenabschnitt (8) der Wägezelle (6) umfasst und der zweite Abschnitt (7; 8) einen Außenabschnitt (7) der Wägezelle (6) umfasst oder dass der erste Abschnitt (7; 8) einen Außenabschnitt (7) der Wägezelle umfasst und der zweite Abschnitt (7; 8) einen Innenabschnitt (8) der Wägezelle umfasst.

2. Hebesystem (1) nach Anspruch 1, das ferner einen Rotator (11) umfasst, der am ersten Abschnitt (7; 8) befestigt ist und der zwischen der Lastzelle 6 und dem Hebearm (3) angeordnet ist.

3. Hebesystem (1) nach Anspruch 1, das ferner einen Rotator (11) umfasst, der am zweiten Abschnitt (7; 8) befestigt ist und der zwischen der Lastzelle (6) und dem Arbeitsgerät (5) angeordnet ist.

4. Hebesystem (1) nach einem der vorhergehenden Ansprüche, wobei der erste Abschnitt (7; 8), der zweite Abschnitt (7; 8) und der Zwischenabschnitt (9) einteilig ausgebildet sind.

5. Hebesystem (1) nach einem der vorhergehenden Ansprüche, wobei der erste Abschnitt (7; 8), der zweite Abschnitt (7; 8) und der Zwischenabschnitt (9) unter Verwendung eines Befestigungsmittels in radialer Richtung miteinander verbunden sind.

6. Hebesystem (1) nach einem der vorhergehenden Ansprüche, wobei die Lastzelle (6) ein zentriertes Durchgangsloch (16) zur Abgabe von Öl zum Arbeitsgerät (5) umfasst.

7. Hebesystem (1) nach einem der vorhergehenden Ansprüche, wobei der Zwischenabschnitt (9) Schwächungsabschnitte (18) umfasst, um eine Dehnung im Zwischenabschnitt (9) zu verstärken.

8. Hebesystem (1) nach einem der vorhergehenden Ansprüche, das ferner einen Verstärker (13) umfasst, der mit der mindestens einer Dehnungsmesseinrichtung (10) verbunden ist, um das Signal von der mindestens einen Dehnungsmesseinrichtung (10) zu verstärken.

9. Hebesystem (1) nach einem der vorhergehenden Ansprüche, das ferner einen Steuerkasten (14) umfasst, der ausgelegt ist, das Gewicht der Last (2) auf der Grundlage eines Signals von der mindestens einen Dehnungsmesseinrichtung (10) zu berechnen.

10. Hebesystem (1) nach Anspruch 9, das ferner eine Anzeigeeinheit (15) in Kommunikation mit dem Steuerkasten (14) umfasst, die ausgelegt ist, das berechnete Gewicht der Last (2) anzuzeigen.

11. Hebesystem (1) nach Anspruch 10, wobei die Kommunikation zwischen der Anzeigeeinheit (15) und dem Steuerkasten (14) mittels eines Kabels oder einer drahtlosen Verbindung erfolgt.

12. Verfahren zum Wiegen einer Last (2), die durch das Hebesystem (1) gehandhabt wird, nach einem der Ansprüche 1 bis 11,
**gekennzeichnet durch** die folgenden Schritte:
Heben der Last (2) mittels des Arbeitsgeräts (5) und
Berechnen eines Gewichts der Last (2) auf der Grundlage eines Signals der mindestens einen Dehnungsmesseinrichtung (10).

13. Computerprogrammprodukt, das Anweisungen enthält, die ausgelegt sind, das Verfahren nach Anspruch 12 durchzuführen, wenn sie in einem Hebesystem nach Anspruch 9 abgearbeitet werden.

14. Computerlesbares Speichermedium, das ein Computerprogrammprodukt nach Anspruch 13 umfasst.

## Revendications

1. Système de levage (1) pour manipuler une charge (2), comprenant
un bras de levage (3) s'étendant au moins partiellement entre un dispositif de commande (4) et un outil de travail (5), et
une cellule de charge (6) pour détecter un poids de la charge (2), la cellule de charge (6) comprenant :
une première partie (7 ; 8) reliée au bras de levage (3),
une deuxième partie (7 ; 8) reliée à l'outil de travail (5), et
une partie intermédiaire (9) reliant la première partie (7 ; 8) et la deuxième partie (7 ; 8), la partie intermédiaire (9) comprenant au moins une jauge de contrainte (10),
la première partie (7 ; 8), la deuxième partie (7 ; 8) et la partie intermédiaire (9) étant reliées les unes aux autres dans une direction radiale,
**caractérisée en ce que** la première partie (7 ; 8) comprend une partie intérieure (8) de la cellule de charge (6) et la deuxième partie (7 ; 8) comprend une partie extérieure (7) de la cellule de charge (6) ou que la première partie (7 ; 8) comprend une partie extérieure (7) de la cellule de charge, et la deuxième partie (7 ; 8) comprend une partie intérieure (8) de la cellule de charge.

2. Système de levage (1) selon la revendication 1, comprenant en outre un rotateur (11) fixé à la première partie (7 ; 8) et disposé entre la cellule de charge (6) et le bras de levage (3).

3. Système de levage (1) selon la revendication 1, comprenant en outre un rotateur (11) fixé à la deuxième partie (7 ; 8) et disposé entre la cellule de charge (6) et l'outil de travail (5).

4. Système de levage (1) selon l'une quelconque des revendications précédentes, la première partie (7 ; 8), la deuxième partie (7 ; 8) et la partie intermédiaire (9) étant formées de façon intégrée.

5. Système de levage (1) selon l'une quelconque des revendications précédentes, la première partie (7 ; 8), la deuxième partie (7 ; 8) et la partie intermédiaire (9) étant reliées les unes aux autres dans une direction radiale en utilisant un moyen de fixation.

6. Système de levage (1) selon l'une quelconque des revendications précédentes, la cellule de charge (6) comprenant un trou traversant centré (16) pour l'alimentation en huile de l'outil de travail (5).

7. Système de levage (1) selon l'une quelconque des revendications précédentes, la partie intermédiaire (9) comprenant des parties d'affaiblissement (18) afin d'améliorer toute contrainte dans la partie intermédiaire (9).

8. Système de levage (1) selon l'une quelconque des revendications précédentes, comprenant en outre un amplificateur (13) relié à l'au moins une jauge de contrainte (10) pour améliorer le signal de l'au moins une jauge de contrainte (10).

9. Système de levage (1) selon l'une quelconque des revendications précédentes, comprenant en outre un boîtier de commande (14) adapté pour calculer le poids de la charge (2) sur la base d'un signal provenant de l'au moins une jauge de contrainte (10).

10. Système de levage (1) selon la revendication 9, comprenant en outre une unité d'affichage (15) en communication avec le boîtier de commande (14) adaptée pour afficher le poids calculé de la charge (2).

11. Système de levage (1) selon la revendication 10, la communication entre l'unité d'affichage (15) et le boîtier de commande (14) étant réalisée au moyen d'une liaison par câble ou sans fil.

12. Procédé pour peser une charge (2) manipulée par le système de levage (1) selon l'une quelconque des revendications 1 à 11,
**caractérisé par** l'étape
du soulèvement de la charge (2) au moyen de l'outil de travail (5), et
du calcul d'un poids de la charge (2) sur la base d'un signal provenant de l'au moins une jauge de contrainte (10).

13. Produit de programme informatique comprenant des instructions adaptées pour effectuer le procédé selon la revendication 12 lorsqu'il est exécuté dans un système de levage selon la revendication 9.

14. Support de stockage lisible par ordinateur comprenant un programme informatique selon la revendication 13.
